# EUROPEAN PATENT SPECIFICATION

(11) **EP 1 006 247 B1**
(45) Date of publication and mention of the grant of the patent: **24.10.2001**
(21) Application number: 99306177.9
(22) Date of filing: 03.08.1999
(51) Int. Cl.: E05B 17/00

(54) **Door lock system**
Türschlosssystem
Système de serrure de porte

(30) Priority: 03.12.1998 JP 34369698
(43) Date of publication of application: 07.06.2000
(73) Proprietor: TAKIGEN MANUFACTURING CO., LTD., Shinagawa-ku Tokyo-to (JP)
(72) Inventor: Segawa, Shirou, c/o Takigen Manufacturing Co. Ltd, Tokyo (JP); Ikeno, Yoshihiro, c/o Fuji Elect. Machinery Co.Ltd, Saitama-ken (JP)
(74) Representative: W.P. Thompson & Co.

(56) References cited:
- EP-A- 0 261 268
- EP-A- 0 847 121
- WO-A-93/20315

## Description

The present invention relates to a door lock system used in boxes and like containers for receiving therein electric instruments, communication instruments and like instruments.

It has been known to dispose a packing member between an opening portion of a box body and a door for the purpose of sealing up, i.e., strictly cutting off the interior space of the box body from the outside space. In use, it is very difficult to uniformly compress the packing member over its entire length. Although it has been proposed to provide a plurality of clamping members along the packing member, this requires simultaneous clamping opertions of these clamping members. When some of these clamping members are ahead of the remaining ones in clamping operations, unclamped portions of the packing member corresponding to such remaining clamping members receive expelled parts of already clamped portions of the packing member, so that the unclamped portions of the packing member bulge out of their positions to prevent the door from being neatly closed, which prevents a latch of the clamping member from engaging with a corresponding socket member of the box body.

In view of the above, another proposal has been made, in which: a plurality of rod members are connected with each other and provided in a peripheral portion of a door; a plurality of hook members are provided in a plurality of portions of the rod members; and, a plurality of roller units are fixedly mounted on a box body, wherein the hook members are engaged with the roller units to draw the roller units aside in closing and locking the door, so that a packing member disposed between the door and the box body is compressed therebetween. In this other proposal, however, a resilient force exerted by the thus compressed packing acts directly on the hook members and, therefore, on the rods on which the hook members are fixed, causing considerable flexing of the rods, resulting in permanent deformation of the rods after the door has been used several times. Such deformations often make it impossible to lock the door.

WO-A-93/20315 discloses a bolt lock, in particular for control-cabinet doors. The lock comprises a flat-bar bolt which is mounted to move parallel to the edge of the door, preferably within the arc swing of the door, and which has at least one locking section. The lock further comprises a bolt holder, mounted on the door frame and designed to receive and hold the locking section of the bolt. The flat-bar bolt is twisted about its longitudinal axis over at least one part of its length in order to form the locking section and is twisted in such a way that the bolt surface in the twisted section is at an angle to the orientation of the bolt and so that a lug in the bolt holder extends out over the locking section at the same angle to the bolt, thus acting as a locking surface.

### SUMMARY OF THE INVENTION

Consequently, it is an object of the present invention to provide a door lock system, which is free from risk that in a locking operation of a door, vertical and horizontal rods on which hook members are fixedly mounted cause flexing, and that the hook members are subjected to shearing forces, or cause flexing, whereby a packing member is substantially uniformly compressed between the door and a box body.

The above object of the present invention is accomplished by providing:

A door lock system comprising:
a box body on which a roller unit is fixedly mounted;
a door on which a roller unit is fixedly mounted;
a packing member disposed between the box body and the door;
a right and a left vertical rod disposed along the right and the left side of the door, respectively, at least one of the vertical rods being provided with a rack portion engaging with a pinion gear of a handle member;
an upper and a lower lateral rod disposed along the upper and the lower side of the door, respectively;
a turning-point transmission unit, which is fixedly mounted in each of corner portions of the door and provided with a connecting bar through which the vertical rods and the lateral rods are connected with each other to form a chain-like assembly; and
a hook member provided with a pair of hook portions, one of which is engaged with the roller unit of the box body to draw the roller unit aside, and the other of which is engaged with the roller unit of the door to draw the roller unit aside in closing operation of the door,
wherein, when the handle member is pulled out and rotated, the hook member is moved to draw both the roller unit of the box body and the roller unit of the door aside so that the packing member is compressed between the door and the box body.

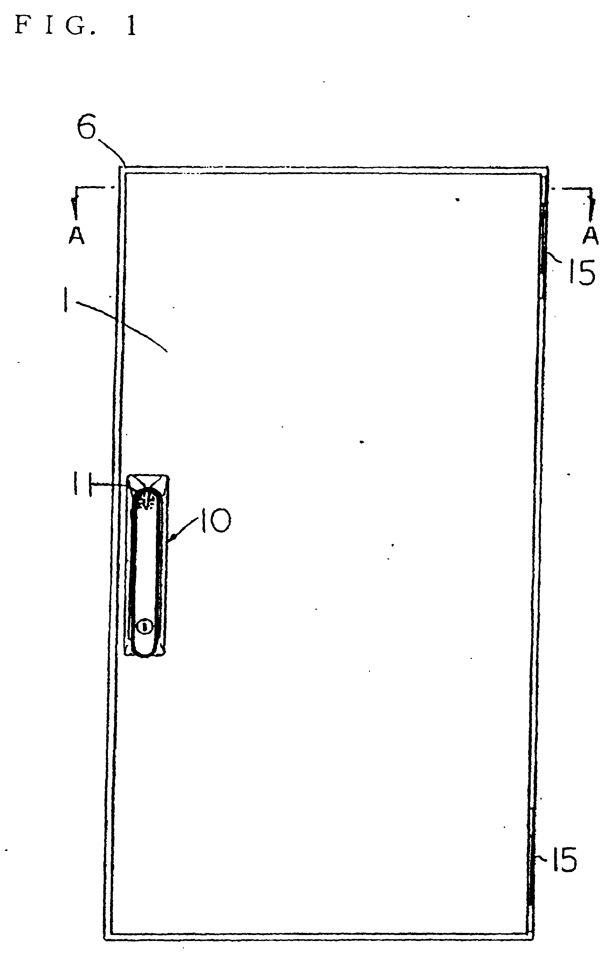

By way of example only, a specific embodiment of the present invention will now be described, with reference to the accompanying drawings, in which:-
Fig. 1 is a front view of a door lock system of an embodiment of the present invention;
Fig. 2 is a cross-sectional view of the door lock system of the present invention in a condition in which a door is locked, taken along the line A-A of Fig. 1;

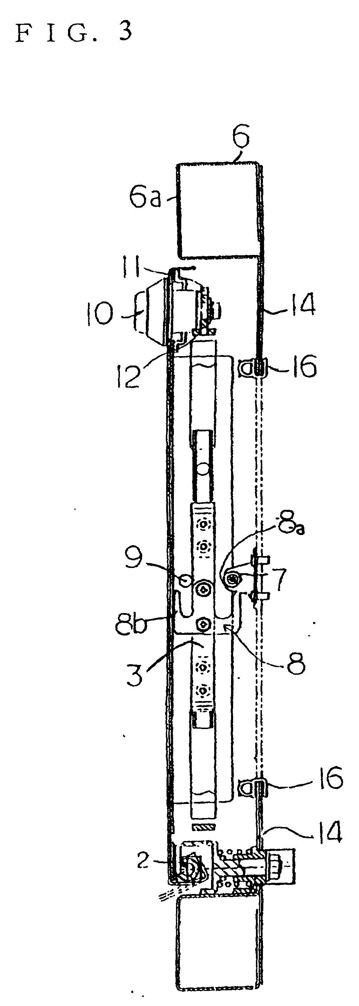

Fig. 3 is a cross-sectional view of the door lock system of the present invention in a condition in which a door is unlocked, taken along the line A-A of Fig. 1;
Fig. 4 is a cross-sectional view of the door lock system of the present invention, taken along the line B-B of Fig. 2; and
Fig. 5 is an enlarged perspective view of a hook member in a condition in which the door is unlocked.

Hereinbelow, the present invention will be described in detail with reference to the accompanying drawings.

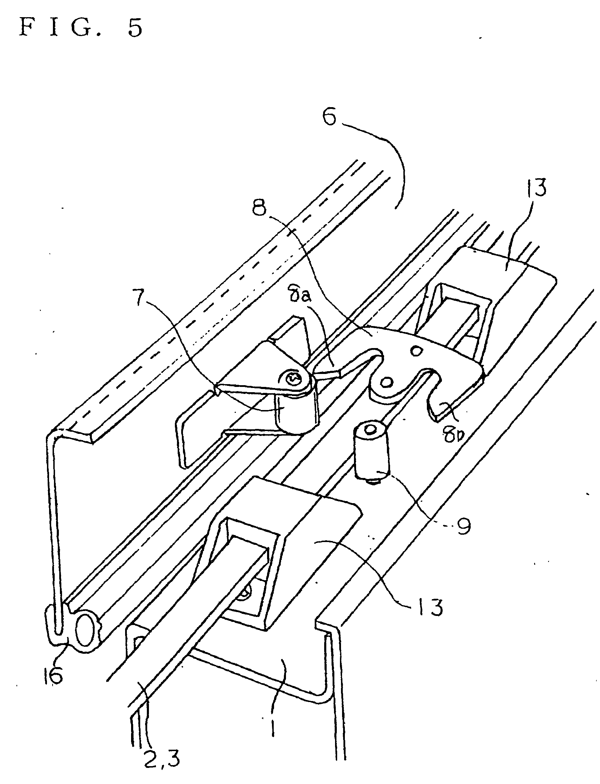

As is dear from Fig. 5, an embodiment of a door lock system of the present invention comprises: a box body 6 on which a roller unit 7 provided with a rotatable roller element is fixedly mounted; a door 1 on which a roller unit 9 is fixedly mounted; and, a packing member 16 or seal (shown in Fig. 5) disposed between the box body 6 and the door 1.

In the door lock assembly of the present invention, a right and a left vertical rod 2 are disposed in the right and the left side of a door 1, respectively. On the other hand, an upper and a lower lateral rod 3 are disposed in the upper and the lower side of a door 1, respectively. A turning-point transmission unit 4 is fixedly mounted in each of corner portions of the door 1, and provided with a connecting bar 5 through which the vertical rods 2 and the lateral rods 3 are connected with each other to form a chain-like assembly.

Of these vertical rods 2, at least one 2 is provided with a rack portion 12 engaging with a pinion gear 11 of a handle member 10.

A hook member 8 is provided with a pair of hook portions 8a, 8b. In a closing operation of the door 1, one 8a of the hook portions 8a, 8b of the hook member 8 is engaged with the roller unit 7 of the box body 6 to draw the roller unit 7 aside, and the other 8b of these hook portions 8a, 8b is engaged with a roller unit 9 of the door 1 to draw the roller unit 9 aside. When the handle member 10 is pulled out and rotated, the hook member 8 is moved to draw both the roller unit 7 of the box body 6 and the roller unit 9 of the door 1 aside so that the packing member 16 is compressed between the door 1 and the box body 6.

At this time, in the hook member 8, its hook portion 8a has its drawing-cam oblique surface engaged with the roller unit 7 of the box body 6. Since the vertical rods 2 and the lateral rods 3 are slidably moved in their longitudinal directions, the other hook portions 8b of the hook members 8 have their drawing-cam oblique surfaces engaged with the roller units 9 of the door 1.

In the embodiment shown in the drawings, all the right and the left vertical rods 2 and the upper and the lower lateral rods 3 are disposed in an inner surface of the door 1. On the other hand, handle member 10 is of a pull-out rotary type, and is embedded in a front surface of the door 1. A rotary shaft provided in a rear-end portion of the handle member 10 is connected with a pinion gear gear 11. Of the vertical rods 2, at least one 2 is provided with a rack portion 12, which is constructed of a series of lateral openings or slots provided in the vertical rod 2 at predetermined intervals corresponding to the pitch of the pinion gear 11.

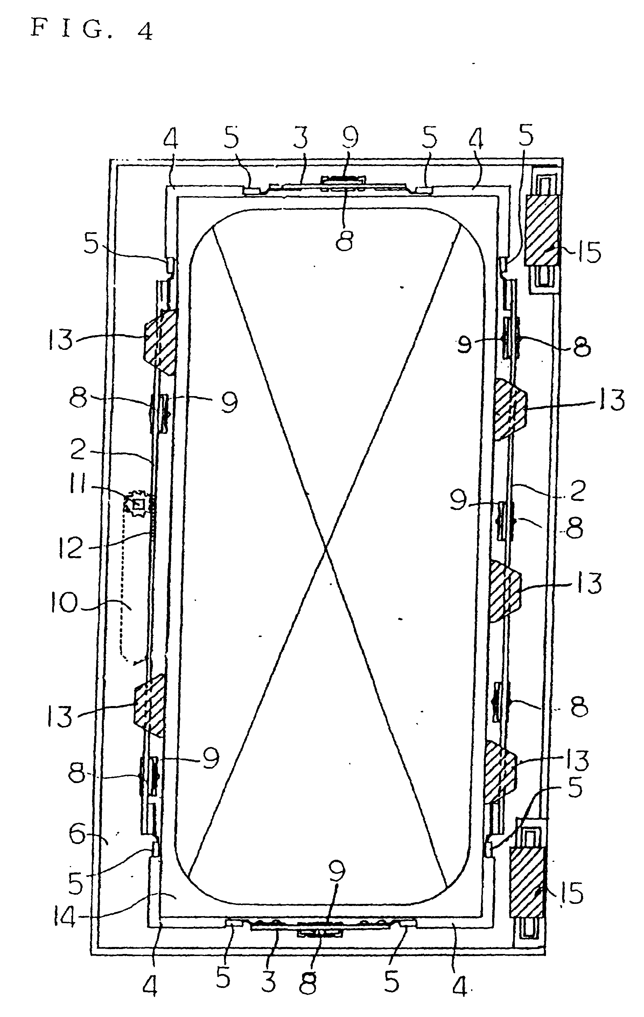

As shown in Fig. 4, the vertical rods 2, lateral rods 3, turning-point transmission units 4 and the connecting bars 5 are connected in series with each other under tension without permitting any slackness. The vertical rod 2, which is longer than the lateral rod 3, is inserted into a guide member 13 fixedly mounted on the inner surface of the door 1, so that the vertical rod 2 is limited in idle motion in horizontal plane, i.e. the lateral movement of the vertical rod in the horizontal plane is restricted.

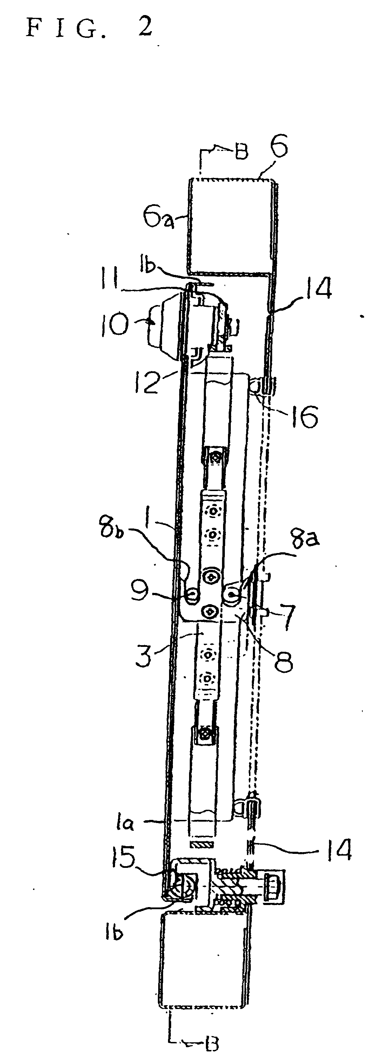

A flange portion 14 extends around the opening portion of a front wall portion 6a of the box body 6 so as to surround the opening portion. As is dear from Fig. 2, the flange portion 14 is constructed of a front concave portion of the box body 6, which concave portion is adjacent to the front wall portion 6a. On the other hand, the door 1 assumes a flat box-like shape, which is opened in its inner surface and constructed of: a main front wall portion 1a, an outline of which is substantially the same size as that of an inner surface of the above-mentioned front concave portion of the box body 6; and bent peripheral wall portions 1b contiguous to the individual side portions of the main front wall portion 1a. The door 1 is mounted on the box body 6 through two hinge units 15 vertically arranged along the right edge surface of the box body 6, and is supported thereby. Adhesively applied and fixed to an end portion of the flange portion 14 is a packing 16 made of rubber. It is also possible to provide the packing 16 in the side of the door 1 alternatively or additionally. Each of the box body 6 and the door 1 is constructed of steel plates.

As described above, in the present invention, in closing the door 1, it is possible for the hook member 8 to have its hook portions 8a and 8b engaged with the roller unit 7 of the box body 6 and the roller unit 9 of the door 1, respectively, to draw these roller units 7, 9 aside, so that the packing 16 is substantially uniformly compressed over its entire length between the box body 6 and the door 1. In addtion, as for the hook members 8 supported by the vertical rods 2 and the lateral rods 3, it is also possible to directly support the hook members 8 by the door 1. The above construction of the present invention ensures that the interior space of the box body 6 is excellent in gas-tight and water-tight properties when closed by the door 1.

Further, the hook member 8 is center-balanced by its hook portions 8a, 8b, so that shearing forces to which the vertical rods 2 and the lateral rods 3 are subjected are lessened. Consequently, it is possible to sufficiently lock the door 1 without causing any flexing of the vertical rods 2 and the lateral rods 3 and also without any fear that the hook members 8 are subjected to shearing forces and cause flexing.

## Claims

1. A door lock system comprising:
a box body (6) on which a roller unit (7) is fixedly mounted;
a door (1) on which a roller unit (9) is fixedly mounted;
a packing member disposed between said box body (6) and said door (1);
a right and a left vertical rod (2) disposed in the right and the left side of said door (1), respectively, at least one of said vertical rods (2) being provided with a rack portion (12) engaging with a pinion gear (11) of a handle member (10);
an upper and a lower lateral rod (3) disposed in the upper and the lower side of said door (1), respectively;
a turning-point transmission unit (4), which is fixedly mounted in each of corner portions of said door (1) and provided with a connecting bar (5) through which said vertical rods (2) and said lateral rods (3) are connected with each other to form a chain-like assembly; and
a hook member (8) provided with a pair of hook portions (8a, 8b), one (8a) of which is engaged with said roller unit (7) of said box body (6) to draw said roller unit (7) aside, and the other (8) of which is engaged with said roller unit (9) of said door (1) to draw said roller unit (9) aside in a closing operation of said door (1);
wherein, when said handle member is pulled out and rotated, said hook member (8) is moved to draw both said roller unit (7) of said box body (6) and said roller unit (9) of said door (1) aside so that said packing member (16) is compressed between said door (1) and said box body (6).

## Patentansprüche

1. Türverschlusssystem, umfassend:
einen Kastenkörper (6), an dem eine Rolleneinheit (7) fest angebracht ist;
eine Tür (1), an der eine Rolleneinheit (9) fest angebracht ist;
ein zwischen dem genannten Kastenkörper (6) und der genannten Tür (1) angeordnetes Verpackungselement;
einen rechten und linken vertikalen Stab (2), der in der rechten bzw. linken Seite der genannten Tür (1) angeordnet ist, wobei wenigstens einer der genannten vertikalen Stäbe (2) mit einem Zahnstangenteil (12) versehen ist, der mit einem Zahnstangengetriebe (11) eines Griffelements (10) in Eingriff steht;
einen oberen und unteren Querstab (3), der in der oben bzw. unteren Seite der genannten Tür (1) angeordnet ist;
eine Drehpunkt-Übertragungseinheit (4), die fest in jedem der Eckteile der genannten Tür (1) angebracht und mit einer Verbindungsstange (5) versehen ist, durch die die genannten vertikalen Stäbe (2) und die genannten Querstäbe (3) miteinander zum Bilden einer kettenartigen Baugruppe verbunden werden; und
ein Hakenelement (8), das mit einem Paar von Hakenteilen (8a, 8b) versehen ist, von denen einer (8a) mit der genannten Rolleneinheit (7) des genannten Kastenkörpers (6) in Eingriff steht, um die genannte Rolleneinheit (7) zur Seite zu ziehen, und von denen der andere (8) mit der genannten Rolleneinheit (9) der genannten Tür (1) in Eingriff steht, um die genannte Rolleneinheit (9) bei einer Schließoperation der genannten Tür (1) zur Seite zu ziehen;
wobei, wenn das genannte Griffelement herausgezogen und gedreht wird, das genannte Hakenelement (8) bewegt wird, um sowohl die genannte Rolleneinheit (7) des genannten Kastenkörpers (6) als auch die genannte Rolleneinheit (9) der genannten Tür (1) zur Seite zu ziehen, so dass das genannte Verpackungselement (16) zwischen der genannten Tür (1) und dem genannten Kastenkörper (6) zusammengedrückt wird.

## Revendications

1. Système de verrouillage de porte comprenant :
un corps de boîtier (6) sur lequel une unité à rouleau (7) est montée de manière fixe;
une porte (1) sur laquelle une unité à rouleau (9) est montée de manière fixe;
un membre de garnissage disposé entre ledit corps de boîtier (6) et ladite porte (1);
une tige verticale droite et une gauche (2) disposées du côté droit et du côté gauche de ladite porte (1), respectivement, au moins une desdites tiges verticales (2) étant pourvue d'une partie à crémaillère (12) engageant un engrenage à pignon (11) d'un membre de poignée (10);
une tige latérale supérieure et une inférieure (3) disposées du côté supérieur et du côté inférieur de ladite porte (1), respectivement;
une unité de transmission de point tournant (4), qui est montée de manière fixe dans chacune des parties de coin de ladite porte (1) et pourvue d'une barre de liaison (5) par laquelle lesdites tiges verticales (2) et lesdites tiges latérales (3) sont connectées l'une à l'autre pour former un ensemble genre chaîne; et
un membre de crochet (8) pourvu d'une paire de parties à crochet (8a, 8b), dont l'une (8a) est engagée avec ladite unité à rouleau (7) dudit corps de boîtier (6) pour tirer ladite unité de côté (7), et dont l'autre (8) est engagée avec ladite unité à rouleau (9) de ladite porte (1) pour tirer ladite unité à rouleau (9) de côté dans une opération de fermeture de ladite porte (1);
où, lorsque ledit membre de poignée est sorti et tourné, ledit membre de crochet (8) est déplacé pour tirer ladite unité à rouleau (7) dudit corps de boîtier (6) et ladite unité à rouleau (9) de ladite porte (1) de côté de sorte que le membre de garnissage (16) est comprimé entre ladite porte (1) et ledit corps de boîtier (6).
